# EUROPÄISCHE PATENTSCHRIFT

(11) **EP 1 425 328 B1**
(45) Veröffentlichungstag und Bekanntmachung des Hinweises auf die Patenterteilung: **26.11.2008**
(21) Anmeldenummer: 02762442.8
(22) Anmeldetag: 13.08.2002
(51) Int. Cl.: C08G 18/12, C08G 18/10, C08G 18/48, C09J 175/12

(54) **SCHNELLER 1K-POLYURETHANKLEBSTOFF**
FAST-SETTING 1K-POLYURETHANE GLUE
COLLE POLYURETHANE 1 K A PRISE RAPIDE

(30) Priorität: 16.08.2001 DE 10140102
(43) Veröffentlichungstag der Anmeldung: 09.06.2004
(73) Patentinhaber: Henkel AG & Co. KGaA, 40589 Düsseldorf (DE)
(72) Erfinder: GRÜNEWÄLDER, Bernhard, 40721 Hilden (DE); HALLER, Werner, 40699 Erkrath (DE); SCHÖTTMER, Bernhard, 40789 Monheim (DE); EMPT, Thomas, 41747 Viersen (DE); KLUTH, Hermann, 40595 Düsseldorf (DE)
(86) Internationale Anmeldenummer: PCT/EP2002/009049
(87) Internationale Veröffentlichungsnummer: WO 2003/016368

(56) Entgegenhaltungen:
- WO-A-00/44847
- WO-A-95/10555
- DE-A- 19 646 879
- US-A- 4 426 487

## Beschreibung

Die Erfindung betrifft einen schnellen 1K-Polyurethanklebstoff mindestens enthaltend ein Polyisocyanatpräpolymeres und mindestens ein Aminpolyol.

Die schnelle, dauerhafte Fixierung von Werkstücken ist eine in Haushalt, Handwerk und Industrie häufig zu lösende Aufgabe. Dort, wo eine mechanische Fixierung nicht möglich oder unerwünscht ist, wird besonders häufig auf die Verklebung von entsprechenden Werkstücken zurückgegriffen. In Abhängigkeit vom Material der zu verklebenden Werkstücke und der Belastung der verklebten Werkstücke durch äußere Einflüsse, beispielsweise durch Feuchtigkeit, werden an einen zu diesem Zweck geeigneten Klebstoff unterschiedlichste Anforderungen gestellt.

So lassen sich eine Reihe von Werkstoffen, beispielsweise Papier oder Pappe, mit Hilfe von bekannten Cyanacrylatklebstoffen besonders schnell dauerhaft fixieren. Derartige Cyanacrylatklebstoffe weisen jedoch Nachteile auf, die ihren Einsatz in vielen Bereichen der Werkstückverklebung verhindern. So ist beispielsweise die Adhäsion von Cyanacrylatklebstoffen auf Holz unbefriedigend, wodurch die Belastbarkeit einer Holzverklebung mit Cyanacrylatklebstoffen nur ein geringes Niveau erreicht. Darüber hinaus können Cyanacrylatklebstoffe nicht für Verklebungen eingesetzt werden, die einen oder mehrere Spalte in der Klebstoffuge aufweisen, da solche Klebstoffe keine spaltüberbrückenden Eigenschaften aufweisen.

Weiterhin sind insbesondere zur Durchführung von Holzverklebungen Holzleime bekannt, die üblicherweise auf Basis von Polyvinylacetatdispersionen formuliert sind. Derartige Holzleime zeigen gute Adhäsion auf vielen Substraten, insbesondere auf Holz. Die Abbindegeschwindigkeit solcher Leime, d.h., die bis zur Ausbildung einer belastbaren Verklebung verstreichende Zeit, ist jedoch sehr lang, so daß eine andauernde mechanische Fixierung der zu verklebenden Werkstücke in der Regel unverzichtbar ist. Darüber hinaus ist der Einsatz solcher Klebstoffe oft dann problematisch, wenn die Verklebung Feuchtigkeit ausgesetzt wird, da die Holzleime üblicherweise nur eine begrenzte Beständigkeit gegenüber Wasser aufweisen.

Zur Verklebung von Holzwerkstücken eignen sich darüber hinaus auch Polyurethanklebstoffe (PUR-Klebstoffe). Solche Klebstoffe werden im Handel als 1K oder 2K-Klebstoffe angeboten. Die Verwendung von 2k-Klebstoffen stößt beim Anwender oft auf Bedenken, da der Anwendung des Klebstoffs selbst ein häufig als problematisch empfundener Mischvorgang der beiden Klebstoffkomponenten vorausgeht. Darüber hinaus sind die Abbindezeiten bekannter 2K-PUR-Klebstoffe für eine schnelle Fixierung von Werkstücken immer noch zu langsam.

1-K-PUR-Klebstoffe sind ebenfalls bekannt (siehe z. B. Habenicht, Gerd "Kleben: Grundlagen, Technologie, Anwendungen" 2. Auflage, 1990, Seiten 65 und 66). Sie enthalten üblicherweise aromatische Polyisocyanate und Polyole bzw. daraus hergestellte Präpolymere mit NCO-Gruppen und Katalysatoren sowie sonstige Additive. In Gegenwart von Luftfeuchtigkeit binden sie innerhalb von 10 bis 60 Minuten ab. Bei den Katalysatoren handelt es sich gewöhnlich um Zinn-Verbindungen und/oder tertiäre Amine in Konzentrationen von bis zu 1 Gew.-%.

Es sind auch 1-K-PUR-Klebstoffe mit aliphatischen Diisocyanaten bekannt. Insbesondere werden bei solchen 1-K-PUR-Klebstoffen Trimerisierungsprodukte von aliphatischen Diisocyanaten eingesetzt, da sie nur geringe Anteile flüchtiger Isocyanate enthalten und deswegen toxikologisch weniger bedenklich sind und nicht gekennzeichnet werden müßten. Die aliphatischen Isocyanate haben jedoch den Nachteil, wesentlich langsamer zu reagieren als aromatische. Sie waren deswegen in der Praxis für viele Anwendungen bei denen es auf ein besonders schnelles Abbinden des Klebstoffs ankommt, nicht brauchbar.

Die Abbindegeschwindigkeit von Polyurethanklebstoffen läßt sich zwar durch die Erhöhung der Katalysatormenge im Klebstoff beschleunigen, dies führt jedoch zu Problemen, welche die Klebstoffqualität und damit die Akzeptanz beim Anwender verringern. Höhere Katalysatorkonzentrationen führen oft zu nicht-lagerstabilen Klebstoffen, weil durch die erhöhte Katalysatormenge auch Nebenreaktionen beschleunigt werden, die innerhalb weniger Monate die Viskosität des Klebstoffs unzulässig hoch ansteigen lassen wodurch der Klebstoff unbrauchbar wird. Weiterhin wird die offene Zeit des Klebstoffs, also die Zeit, welche dem Anwender nach dem Auftrag des Klebstoffs auf ein Werkstück zum Zusammenfügen, Ausrichtung und Pressen der Werkstücke zur Verfügung steht, auf ein inakzeptables Maß verringert.

In der WO 97/19122 wird ein 1K-Polyurethanklebstoff auf der Basis mindestens eines Polyisocyanates, mindestens einer gegenüber den Isocyanaten reaktiven Oligomer-Verbindung und mindestens eines Katalysators beschrieben, der mindestens ein tertiäres Amin mit mindestens einer funktionellen Gruppe zum Einbau in der Polymerkette umfaßt. Das einbaubare tertiäre Amin kann unter anderem OH-Gruppen als funktionelle Gruppen enthalten, z.B. Dimethylaminoethoxy-ethanol. Daneben können auch übliche Katalysatoren verwendet werden, die nicht eingebaut werden, z.B. Triethylamin. Die Polyisocyanate können sowohl aliphatisch als auch aromatisch sein; vorzugsweise sind sie aliphatisch. Die in der WO 97/19122 beschriebene Effekte sind verbesserungsbedürftig. Das gilt insbesondere für die Lagerstabilität von Präpolymeren auf der Basis aromatischer Polyisocyanate, für Abbindezeiten unter 5 Minuten sowie für die Zugscherfestigkeiten, wenn auch ausgefallene Anwendungsgebiete abgedeckt werden sollen.

In der US-A-4426487 wird ein 1K-Polyurethanklebstoff beschrieben, der ein Polyisocyanatpräpolymeres, Phosphorsäureester und Lösemittel enthält. Das Polyisocyanatpräpolymere enthält als Baustein ein Aminopolyetherpolyol mit einem molaren Verhältnis von Ethergruppen zu Aminostickstoff im Aminopolyetherpolyol von ca. 17 zu 1. Es werden Abbindezeiten von 5 bis 15 Minuten beschrieben.

Die WO 00/44847 A beschreibt ebenfalls einen 1K-Polyurethanklebstoff, enthaltend ein Polyisocyanatpräpolymeres und ein Aminopolyetherpolyol, wobei das molare Verhältnis von Ethergruppen zu Aminostickstoff im Aminopolyetherpolyol ca. 0,2 bis 76 beträgt. Für einen solchen Klebstoff werden Presszeiten von 10 bis 20 Minuten beschrieben.

Gegenstand der WO 95/10555 ist eine feuchtigkeitsaktivierte Klebstoffzusammensetzung, die das Reaktionsprodukt eines Polyisocyanats und einer gegenüber Isocyanatgruppen reaktiven Komponente, mindestens ein auf einem aliphatischen tertiären Amin basierendes Polyol und gegebenenfalls einen Katalysator enthält. Als Beispiel für die verwendeten Katalysatoren werden insbesondere tertiäre Amine beschrieben. Für die Klebstoffzusammensetzungen der WO 95/10555 werden Lagerstabilitäten von ca. einem Monat oder mehr unter Feuchtigkeitsauschluss genannt. Als bevorzugte Anpresszeiten werden 10 bis 20 Minuten aufgeführt

Es bestand daher ein Bedürfnis nach Klebstoffen, die ein besonders schnelles Fixieren und Verkleben von Werkstücken, insbesondere von Holzwerkstücken, erlauben, wobei die Verklebung sowohl spaltfüllend erfolgen kann als auch eine ausreichende Beständigkeit gegenüber äußeren Einflüssen wie Feuchtigkeit oder direkten Wasserkontakt aufweist.
Die Beschleunigung der Fixierung sollte sich sowohl auf die offene Zeit beziehen als auch möglichst absolut vorliegen.
Weiterhin bestand ein Bedürfnis nach Klebstoffen, welche die oben genannten Eigenschaften aufweisen und zudem über eine ausreichende offene Zeit verfügen.

Der vorliegenden Erfindung lag daher die Aufgabe zugrunde, einen derartigen Klebstoff zur Verfügung zu stellen.

Gelöst wird die der Erfindung zugrundeliegende Aufgabe durch einen 1K-Polyurethanklebstoff, wie er im Rahmen des nachfolgenden Textes beschrieben wird.

Gegenstand der vorliegenden Erfindung ist daher ein 1K-Polyurethanklebstoff mit einem Gehalt an Alkalimetallionen von weniger als 20 ppm, mindestens enthaltend ein Polyisocyanatpräpolymeres und mindestens ein 2 bis 4 OH-Gruppen aufweisendes Aminopolyetherpolyol, das in die Polymerkette des Polyisocyanatpräpolymeren eingebunden vorliegt, wobei das molare Verhältnis von Ethergruppen zu Aminostickstoff im Aminopolyetherpolyol 7 bis 30 beträgt, und mindestens einen nicht einbaubaren Katalysator, und zwar im Verhältnis von Katalysator oder Katalysatoren zu Aminopolyetherpolyol oder Aminopolyetherpolyolen von 20:1 bis 1:3.

Ein erfindungsgemäßer 1K-Polyurethanklebstoff enthält mindestens ein Polyisoeyanatpräpolymeres. Unter einem "Polyisocyanatpräpolymeren" wird im Rahmen der vorliegenden Textes eine Verbindung mit einem Molekulargewicht von mindestens 300, insbesondere mindestens 500, und mit mehr als einer Isocyanatgruppe, vorzugsweise mindestens etwa 1,5 oder mindestens etwa 2 Isocyanatgruppen, verstanden, wie sie sich durch Umsetzung einer mindestens eine gegenüber Isocyanatgruppen reaktive funktionelle Gruppen tragenden Verbindung mit einem mehr als 1 Isocyanatgruppe tragenden Polyisocyanat erhalten läßt oder durch Oligomerisierung von Polyisocyanaten.

Zur Herstellung der in den erfindungsgemäßen 1K-PUR-Klebstoffen enthaltenen Polyisocyanatpräpolymeren werden daher polyfunktionelle aromatische oder aliphatische Isocyanate oder daraus hergestellte oligomerisierte Produkte mit NCO-Gruppen oder Gemische aus zwei oder mehr davon eingesetzt.

Unter dem Begriff "polyfunktionell" wird im Rahmen des vorliegenden Textes eine Funktionalität von mehr als 1,0 verstanden, beispielsweise eine Funktionalität von etwa 1,5 oder etwa 2, oder etwa 2,5 bis etwa 3,5, beispielsweise etwa 3, oder eine darüber liegende Funktionalität von beispielsweise etwa 4 oder etwa 5 oder mehr. Die Funktionalität muß dabei nicht unbedingt mit einer ganzen Zahl ausgedrückt werden, es sind auch nicht ganzzahlige Funktionalitäten möglich. Solche nicht ganzzahligen Funktionalitäten liegen beispielsweise in Gemischen von Polyisocyanaten unterschiedlicher Funktionalität vor, wobei die Gesamtfunktionalität über die im Isocyanatgemisch vorliegende Gesamtzahl an Molekülen und die Gesamtzahl an Isocyanatgruppen, bezogen auf das Gesamte Gemisch, ermittelt wird.

Vorzugweise enthalten geeignete polyfunktionelle Isocyanate im Mittel 2 bis höchstens etwa 5, vorzugsweise bis zu etwa 4 NCO-Gruppen.

Beispielsweise werden im Rahmen der vorliegenden Erfindung Diisocyanate Q(NCO)₂ zur Herstellung der Polyisocyanatpräpolymeren eingesetzt, wobei Q für einen aliphatischen, gegebenenfalls substituierten Kohlenwasserstoffrest mit 4 bis etwa 12 Kohlenstoffatomen, einen gegebenenfalls substituierten cycloaliphatischen Kohlenwasserstoffrest mit 6 bis etwa 15 Kohlenstoffatomen, einen gegebenenfalls substituierten aromatischen Kohlenwasserstoffrest mit 6 bis etwa 15 Kohlenstoffatomen oder einen gegebenenfalls substituierten araliphatischen Kohlenwasserstoffrest mit 7 bis etwa 15 Kohlenstoffatomen steht. Beispiele für solche Diisocyanate sind Tetramethylendiisocyanat, Hexamethylendiisocyanat (HDI), Dodecamethylendiisocyanat, Dimerfettsäurediisocyanat, 1,4-Diisocyanato-cyclohexan, 1-Isocyanato-3,3,5-trimethyl-5-isocyanato-methylcyclohexan (Isophorondiisocyanat, IPDI), 4,4'-Diisocyanato-dicyclohexylmethyl, 4,4'-Diisocyanato-dicyclohexylpropan-2,2, 2,4- oder 2,6-Diisocyanato-toluol (2,4- oder 2,6-TDI) oder deren Gemisch, 2,2'-, 2,4'- oder 4,4'-Diisocyanato-diphenylmethan (MDI), Tetramethylxylylendiisocyanat (TMXDI), p-Xylylendiisocyanat, sowie aus diesen Verbindungen bestehende Gemische. Besonders geeignet sind darüber hinaus auch Polymere Polyisocyanate wie Oligomer- oder Polymer-MDI sowie dessen Isomere und Homologe, insbesondere Gemische von 2,2'-, 2,4'- und 4,4'-Diisocyanato-diphenylmethan (MDI) oder Polyisocyanate wie sie durch Phosgenierung technischer Polyamingemische aus der Anilin-Formaldehyd-Kondensation erhältlich sind. Derartige Gemische weisen beispielsweise eine Funktionalität von etwa 2,0 bis etwa 5,0, insbesondere etwa 2,5 bis etwa 4,5, auf.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen oder Biuretgruppen aufweisende Polyisocyanate anteilig mit zu verwenden.

Beispielsweise seien als geeignete Isocyanate genannt Phenylisocyanat, 1,5-Naphthylendiisocyanat, hydriertes MDI (H₁₂MDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, chlorierte und bromierte Diisocyanate, phosphorhaltige Diisocyanate, 4,4'-Diisocyanatophenylperfluorethan, Tetramethoxybutan-1,4-diisocyanat, Dicyclohexylmethandiisocyanat, Cyclohexan-1,4-diisocyanat, Ethylendiisocyanat, Phthalsäurebisisocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,12-Diisocyanatododecan und Dimerfettsäurediisocyanat. Ebenfalls geeignet sind teilweise verkappte Polyisocyanate, welche die Bildung selbstvemetzender Polyurethane ermöglichen, z.B. dimeres Toluylendiisocyanat, oder mit beispielsweise Phenolen, tertiärem Butanol, Phthalimid, Caprolactam partiell oder vollständig umgesetzte Polyisocyanate.

In einer besonderen Ausführungsform enthält die Isocyanatkomponente zur Herstellung der erfindungsgemäßen 1K-PUR-Klebstoffe anteilig Dimerfettsäurediisocyanat. Als Dimerfettsäure bezeichnet man ein Gemisch von überwiegend C₃₆-Dicarbonsäuren, das durch thermische oder katalytische Dimerisierung ungesättigter C₁₈-Monocarbonsäuren, wie Ölsäure, Tallölfettsäure oder Linolsäure, hergestellt wird. Derartige Dimerfettsäuren sind dem Fachmann seit langem bekannt und kommerziell erhältlich. Die Dimerfettsäure läßt sich zu Dimerfettsäureisocyanaten umsetzen. Technisches Dimerfettsäurediisocyanat besitzt im Mittel mindestens zwei und in der Regel weniger als drei Isocyanatgruppen pro Molekül Dimerfettsäure.

Zur Herstellung von 1-K-PUR-Klebstoffen mit geringem Isocyanatgehalt bzw. den in einem solchen Klebstoff enthaltenen Polyisocyanatpräpolymeren eignen sich auch zu Isocyanuraten trimerisierte Diisocyanate, z.B. das Isocyanurat von HDI und IPDI. Die Trimerisierungsreaktion läuft bekanntlich in Gegenwart geeigneter Trimerisierungskatalysatoren ab (siehe z.B. Kunststoff-Handbuch, Bd.7, Polyurethane, Seite 108). Besonders vorteilhaft sind Gemische aus Cyclotrimerisaten aus aliphatischen und cycloaliphatischen Diisocyanaten, insbesondere Mischtrimerisate daraus.

Für den gleichen Zweck eignen sich auch die höheren Homologen des MDI mit 3 und mehr Isocyanatgruppen pro Molekül (= Polymer-MDI), welche z.B. durch destillative Entfernung des difunktionellen Isocyanats aus dem technischen MDI (= Roh-MDI) erhältlich sind. Gleiches gilt für das sogenannte Tri-MDI, dem 3-funktionellen Homologen des MDI.

Als mengemäßige Hauptkomponente der Polyisocyanate können auch höhere Homologe des MDI (Polymer-MDI) oder aliphatische Polyisocyanate, insbesondere trimerisierte Diisocyanate und vor allem trimerisiertes HDI verwendet.

Es kann zweckmäßig sein, oligomerisierte NCO-endständige Addukte aus den oben genannten Isocyanaten und Polyolen, Polyaminen oder Aminoalkoholen einzusetzen, insbesondere Addukte von aromatischen Isocyanaten.

Die in den erfindungsgemäßen 1K-PUR-Klebstoffen enthaltenen Polyisocyanatpräpolymeren werden durch Umsetzung von Polyisocyanaten mit Verbindungen, die mehr als eine gegenüber Isocyanaten reaktionsfähige funktionelle Gruppen aufweisen, hergestellt. Vorzugsweise handelt es sich bei solchen Verbindungen um Polyole, d.h., um Verbindungen mit mehr als einer OH-Gruppe, beispielsweise etwa 1,1, etwa 1,3, etwa 1,5, etwa 1,8 bis etwa 2,8, insbesondere etwa 1,9 bis etwa 2,2, insbesondere etwa 2,0 oder mehr als etwa 2,8, beispielsweise etwa 3, etwa 4 oder mehr OH-Gruppen.

Grundsätzlich eignen sich als Verbindungen die mehr als eine gegenüber Isocyanaten reaktionsfähige funktionelle Gruppen aufweisen beispielsweise OH-Gruppen tragende Polyester, Polyether, Polyacetale, Polycarbonate, Polyacrylate, Polymethacrylate, Polyvinylpolymere oder Gemische aus zwei oder mehr davon. Derartige Verbindungen werden im weiteren Verlauf des vorliegenden Textes der Einfachheit halber als Polymerpolyole bezeichnet. Im weiteren Verlauf des Textes werden daher zur Herstellung von Polymerpolyolen geeignete Verbindungen beschrieben. Der Übersichtlichkeit halber werden die Verbindungen, soweit nichts anderes angegeben ist, als OH-Gruppen tragende Verbindungen dargestellt. Es ist jedoch im Rahmen der vorliegenden Erfindung ebensogut möglich, entsprechende Verbindungen einzusetzen, die anstatt der in der weiteren Beschreibung dargestellten OH-Gruppe eine andere gegenüber NCO-Gruppen reaktive funktionelle Gruppe, beispielsweise eine Aminogruppe oder ein Carboxylgruppe, soweit eine entsprechende Verbindung existiert oder herstellbar ist.

Zur Bildung von Polymerpolyolen geeignete Polyester sind beispielsweise überwiegend lineare Polymere mit endständigen OH-Gruppen (Polyesterpolyole), bevorzugt solche mit zwei oder drei, insbesondere mit zwei OH-Endgruppen. Die Säurezahl solcher Polyesterpolyole ist in der Regel kleiner als etwa 10 und vorzugsweise kleiner als etwa 3. Zum Einsatz als Polymerpolyole im Rahmen der vorliegenden Erfindung geeignet, sind Polyester mit einem Molekulargewicht von etwa 1.000 bis etwa 50.000, beispielsweise etwa 2.000 bis etwa 15.000 oder etwa 2.500 bis etwa 5.000. So können beispielsweise Polyester verwendet werden, die durch Umsetzung von niedermolekularen Alkoholen, insbesondere von linearen oder verzweigten, gesättigten oder ungesättigten, aliphatischen oder aromatischen Glykolen. Beispielsweise sind dies Diethylenglykol, 1,2-Ethandiol, 1,3-Propandiol, 2-Methyl-1,3-propandiol, 1,4-Butandiol, 1,5-Pentandiol, 1,6-Hexandiol, 1,7-Heptandiol, 1,8-Octandiol, 1,9-Nonandiol, 1,10-Decandiol sowie die entsprechenden höheren Homologen, wie sie sich durch schrittweise Verlängerung der Kohlenstoffkette der genannten Verbindungen bilden lassen sowie beispielsweise 2,2,4-Trimethylpentandiol-1,5, 2,2-Dimethylpropandiol-1,3, 1,4-Dimethylolcyclohexan, 1,4-Diethanolcyclohexan, 2-Methyl-2-butyl-1,3-propandiol, 2,2-Dimethyl-1,4-butandiol, 1,4-Dimethylolcyclohexan, Hydroxypivalinsäureneopentylglykolester, Diethylenglykol, Triethylenglykol, Methyldiethanolamin oder aromatisch-aliphatische oder aromatisch-cycloaliphatische Diole mit 8 bis etwa 30 C-Atomen, wobei als aromatische Strukturen heterocyclische Ringsystem oder vorzugsweise isocyclische Ringsysteme wie Naphthalin- oder insbesondere Benzolderivate wie Bisphenol A eingesetzt werden können, zweifach symmetrisch ethoxyliertes Bisphenol A, zweifach symmetrisch propoxyliertes Bisphenol A, höher ethoxylierte oder propoxylierte Bisphenol A-Derivate oder Bisphenol F-Derivate, die Hydrierungsprodukte der genannten Bisphenol-A- und Bisphenol-F-Derivate oder die Produkte der entsprechenden Umsetzung von einer Verbindung oder einem Gemisch aus zwei oder mehr der genannten Verbindungen mit einem Alkylenoxid mit zwei bis etwa 8 C-Atomen oder einem Gemisch aus zwei oder mehr solcher Alkylenoxide.

Geeignete Polyesterpolyole sind beispielsweise durch Polykondensation herstellbar. So können difunktionelle oder trifunktionelle Alkohole oder ein Gemisch aus zwei oder mehr davon, mit Dicarbonsäuren oder Tricarbonsäuren oder einem Gemisch aus zwei oder mehr davon, oder deren reaktiven Derivaten, zu Polyesterpolyolen kondensiert werden. Geeignete Dicarbonsäuren sind beispielsweise Bernsteinsäure und ihre höheren Homologen mit bis zu 44 C-Atomen, ferner ungesättigte Dicarbonsäuren wie Maleinsäure oder Fumarsäure sowie aromatische Dicarbonsäuren, insbesondere die isomeren Phthalsäuren wie Phthalsäure, Isophthalsäure oder Terephthalsäure. Als Tricarbonsäuren sind beispielsweise Zitronensäure oder Trimellithsäure geeignet. Im Rahmen der Erfindung besonders geeignet sind Polyesterpolyole aus mindestens einer der genannten Dicarbonsäuren und Glyzerin, welche einen Restgehalt an OH-Gruppen aufweisen. Besonders geeignete Alkohole sind Hexandiol, Ethylenglykol, Diethylenglykol oder Neopentylglykol oder Gemische aus zwei oder mehr davon. Besonders geeignete Säuren sind Phthalsäure, Isophthalsäure, Terephthalsäure oder Adipinsäure oder Gemische aus zwei oder mehr davon.

Weiterhin als Polyolkomponente zur Herstellung der Polyester einsetzbare Polyole sind beispielsweise Diethylenglykol oder höhere Polyethylenglykole mit einem Molekulargewicht (Mₙ) von etwa 100 bis etwa 22.000, beispielsweise etwa 200 bis etwa 15.000 oder etwa 300 bis etwa 10.000, insbesondere etwa 500 bis etwa 2.000.

Im Rahmen der vorliegenden Erfindung als Polymerpolyole einsetzbare Polyester umfassen insbesondere die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (sofern existent) auch die entsprechenden Polycarbonsäureanhydride oder entsprechende Polycarbonsäureester mit Alkoholen mit vorzugsweise 1 bis 8 C-Atomen eingesetzt werden. Die Polycarbonsäuren können aliphatisch, cycloaliphatisch, aromatisch und/oder heterocyclisch sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Tetrabromphthalsäureanhydrid Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein.

Entsprechende Polyester können beispielsweise Carboxylendgruppen aufweisen. Aus Lactonen, beispielsweise ε-Caprolacton oder Hydroxycarbonsäuren, beispielsweise ω-Hydroxycapronsäure, erhältliche Polyester, können ebenfalls mindestens anteilsweise eingesetzt werden.

Zur Herstellung der Polyesterpolyole kann es gegebenenfalls vorteilhaft sein, anstelle der Dicarbonsäuren entsprechende Säurederivate wie Carbonsäureanhydride oder Carbonsäurechloride zu verwenden, sofern diese erhältlich sind.

In einer bevorzugten Ausführungsform der Erfindung werden 1,2-Ethandiol, 1,3-Propandiol, 2-Methyl-1,3-propandiol, 1,4-Butandiol, 1,6-Hexandiol, 2,2-Dimethylpropandiol-1,3, 1,4-Dimethylolcyclohexan, 1,4-Diethanolcyclohexan und ethoxylierte oder propoxylierte Produkte des 2,2-Bis-(4-hydroxyphenylen)-propan (Bisphenol A) zur Herstellung der Polyesterpolyole eingesetzt. Je nach den gewünschten Eigenschaften der mit den entsprechenden Polymerpolyolen ausgestatteten Polyisocyanatpräpolymeren können die genannten Polyesterpolyole alleine oder als Mischung von zwei oder mehr der genannten Polyesterpolyole in verschiedenen Mengenverhältnissen zur Herstellung der Polyisocyanatpräpolymeren eingesetzt werden. Als Lactone für die Herstellung der Polyesterpolyole eignen sich zum Beispiel Dimethylpropiolacton, γ-Butyrolacton oder ε-Caprolacton.

Ebenfalls zum Einsatz als Polymerpolyole bei der Herstellung der obengenannten 1K-PUR-Klebstoffe geeignet sind Polyetherpolyole. Unter Polyetherpolyolen werden im wesentlichen lineare, im Sinne des oben gesagten endständige OH-Gruppen aufweisende Substanzen mit Etherbindungen verstanden. Geeignete Polyetherpolyole können beispielsweise durch Polymerisation von cyclischen Ethern wie Ethylenoxid, Propylenoxid, Butylenoxid oder Tetrahydrofuran oder durch Umsetzung eines Gemischs aus zwei oder mehr Alkylenoxiden mit 2 bis 12 C-Atomen im Alkylenrest mit einem Startermolekül, das zwei aktive Wasserstoffatome aufweist, hergestellt werden. Als Alkylenoxide eignen sich insbesondere Ethylenoxid, 1,2-Propylenoxid, Epichlorhydrin, 1,2-Butylenoxid oder 2,3-Butylenoxid oder Gemische aus zwei oder mehr davon.

Die Polymerisation verläuft in der Regel unter basischer Katalyse. Im Rahmen der vorliegenden Erfindung werden als Polyether beispielsweise Polyalkylenglykole eingesetzt, wie sie durch Polymerisation von Ethylenoxid oder Propylenoxid, gegebenenfalls im Gemisch mit C₄₋₁₂-Alkylenoxiden, erhältlich sind. Als Polyetherpolyole geeignet sind beispielsweise Polyethylenglykole mit einem Anteil an C₃- oder C₄ Einheiten, oder beidem, wie sie durch Copolymerisation von Ethylenoxid mit Propylenoxid oder Butylenoxid oder deren Gemisch erhältlich sind.

Ebenso geeignet sind Polyether, die mittels Co-Zn-Cyanidkomplexkatalyse erhältlich sind.

In einer bevorzugten Ausführungsform der Erfindung werden als Polyetherpolyole Polyalkylenglykole eingesetzt, die durch Addition von PO oder EO oder deren Gemisch an Diole oder Triole mit primären, sekundären oder tertiären OH-Gruppen, oder Gemischen aus zwei oder mehr solcher Diole oder Triole, als Startmoleküle hergestellt wurden.

Als Startmoleküle sind grundsätzlich Wasser oder alle mono- oder polyfunktionellen niedermolekularen Alkohole oder deren Gemische geeignet, vorzugsweise werden im Rahmen der vorliegenden Erfindung jedoch Polyalkylenglykole eingesetzt, die unter Verwendung eines zwei- oder dreiwertigen Alkohols, beispielsweise Ethylenglykol, Propylenglykol, Butylenglykol, Pentandiol, Hexandiol, Heptandiol, Octandiol sowie deren höheren Homologen, Neopentylglykol, Glyzerin, Trimethylolpropan, Triethylolpropan, Pentaerythrit, Glucose, Sorbit, Mannit oder eines Gemischs aus zwei oder mehr davon als Startmolekül, hergestellt wurden.

Die Polyalkylenglykole können einzeln, d. h. als Polyadditionsprodukt mit üblicherweise bei basisch katalysierten Additionen von Alkylenoxiden an Wasser oder andere Startennoleküle entstehenden Molekulargewichtsverteilungen eingesetzt werden. Es ist jedoch ebenfalls möglich, Gemische verschiedener Polyalkylenglykole mit unterschiedlichen Molekulargewichtsverteilungen zur Herstellung der Polyisocyanatpräpolymeren einzusetzen. Weiterhin ist es möglich Polyalkylenglykole einzusetzen, die durch Addition nur einer Alkylenoxidverbindung an ein Startermolekül entstehen. Es ist jedoch ebenfalls möglich Polyalkylenglykole einzusetzen, die durch Addition verschiedener Alkylenoxide erhältlich sind. Es kann sich dabei sowohl um Block-Copolymere als auch um statistische Copolymere handeln.

Ebenfalls im Rahmen der vorliegenden Erfindung als Polymerpolyole geeignet sind Polymerpolyole mit Ether und Estergruppen, wie sie sich durch Polykondensation von Polycarbonsäuren mit Polyethern erhalten lassen. Grundsätzlich eignen sich hierzu die oben genannten Polycarbonsäuren und Polyether.

Ebenfalls im Rahmen der vorliegenden Erfindung als Polymerpolyole geeignet sind Polymerpolyole mit Ether und Estergruppen, wie sie durch Ringöffnung epoxidierten Ölen, beispielsweise von epoxidiertem Sojaöl, mit Mono oder Polyalkoholen erhältlich sind.

Weiterhin als Polyetherpolyole geeignet sind Polyamide mit OH-Endgruppen, wie sie sich durch Polykondensation von Polycarbonsäuren mit Polyaminen, insbesondere durch Umsetzung von Dicarbonsäuren mit Diaminen, herstellen und mit OH-Endgruppen versehen lassen. Geeignete Dicarbonsäuren sind beispielsweise die im Rahmen dieses Textes bereits erwähnten, zur Herstellung von Polyestern geeigneten Dicarbonsäuren, insbesondere die Dimerfettsäuren.

Im Rahmen einer bevorzugten Ausführungsform der vorliegenden Erfindung werden als Polymerpolyole Polyetherpolyole eingesetzt. Besonders bevorzugt sind dabei Polyetherpolyole, die ein Molekulargewicht von mindestens etwa 500, vorzugsweise jedoch mindestens etwa 1000, beispielsweise etwa 1500 bis etwa 10.000 oder etwa 2000 bis etwa 5.000 aufweisen. Grundsätzlich eignen sich dabei im Sinne der vorliegenden Erfindung die oben beschriebenen Polyetherpolyole aus C₂-C₈-Alkylenoxiden, vorzugsweise werden jedoch Polyetherpolyole eingesetzt, die aus C₃-C₅-Alkylenoxiden, insbesondere aus Propylenoxid aufgebaut sind. Besonders im Sinne der vorliegenden Erfindung geeignet sind die von der Firma BASF vertriebenen Polyetherpolyole der Lupranol-Reihe, beispielsweise Lupranol 1000 oder Voranol P 2000 der Firma Dow Chemicals.

Im Rahmen der vorliegenden Erfindung können als Polymerpolyole beispielsweise auch Polycarbonate eingesetzt werden. Dabei werden beispielsweise Polycarbonate eingesetzt, die im wesentlichen linear sind und über mindestens zwei, vorzugsweise endständige, OH-Gruppen verfügen. Die Herstellung entsprechender Polycarbonatpolyole erfolgt beispielsweise durch Umsetzung eines der obengenannten difunktionellen Alkohole oder eines Gemischs aus zwei oder mehr solcher difunktioneller Alkohole mit Phosgen.

In Mengen von bis zu etwa 10 oder etwa 5 Gew.-%, bezogen auf die gesamte Masse der im Polyisocyanatpräpolymeren enthaltenen Polymerpolyole, können beispielsweise auch aliphatische Alkohole mit drei oder mehr funktionellen Gruppen und 3 bis etwa 15, vorzugsweise etwa 3 bis etwa 10 C-Atomen bei der Herstellung der Polymerpolyole eingesetzt werden. Entsprechend geeignete Verbindungen sind beispielsweise Trimethylolpropan, Triethylolpropan, Glyzerin, Pentaerythrit, Sorbit, Mannit und weitere Zuckeralkohole mit bis zu etwa 10 OH-Gruppen pro Molekül. Ebenfalls zur Herstellung der Polymerpolyole einsetzbar sind die entsprechenden Derivate der genannten Verbindungen, wie sie sich durch Umsetzung mit einem Alkylenoxid mit 2 bis etwa 4 C-Atomen oder einem Gemisch aus zwei oder mehr solcher Alkylenoxide erhalten lassen. Die genannten Verbindungen sind jeweils alleine oder auch als Gemische aus zwei oder mehr der genannten Verbindungen einsetzbar.

Zum Einsatz als Polymerpolyole geeignete Verbindungen der vorgenannten Verbindungsklassen können bereits in einem zum Einsatz als Polymerpolyol geeigneten Molekulargewichtsbereich vorliegen. Es ist jedoch ebensogut möglich, Verbindungen der obengenannten Verbindungsklassen zur Herstellung von,Polymerpolyole einzusetzen, die ein Molekulargewicht aufweisen, das unterhalb des zum Einsatz als Polymerpolyol geeigneten Molekulargewichts oder gewünschten Molekulargewichts im Sinne der vorliegenden Erfindung liegt. In diesem Fall ist es im Rahmen der vorliegenden Erfindung möglich, solche Verbindungen der obengenannten Verbindungsklassen durch Umsetzung mit entsprechenden difunktionellen Verbindungen bis zum Erreichen des erforderlichen oder gewünschten Molekulargewichts zu verlängern. Hierzu eignen sich beispielsweise Dicarbonsäuren, difunktionelle Epoxyverbindungen oder Diisocyanate, wobei in einer bevorzugten Ausführungsform der vorliegenden Erfindung Diisocyanate eingesetzt werden.

Gegebenenfalls können während einer solchen Kettenverlängerung noch vergleichsweise niedermolekulare Diole vorliegen. Beispielsweise sind dies Diethylenglykol, 1,2-Ethandiol, 1,3-Propandiol, 2-Methyl-1,3-propandiol, 1,4-Butandiol, 1,5-Pentandiol, 1,6-Hexandiol, 1,7-Heptandiol, 1,8-Octandiol, 1,9-Nonandiol, 1,10-Decandiol sowie die entsprechenden höheren Homologen, wie sie sich durch schrittweise Verlängerung der Kohlenstoffkette der genannten Verbindungen bilden lassen sowie beispielsweise 2,2,4-Trimethylpentandiol-1,5, 2,2-Dimethylpropandiol-1,3, 1,4-Dimethylolcyclohexan, 1,4-Diethanolcyclohexan, 2-Methyl-2-butyl-1,3-propandiol, 2,2-Dimethyl-1,4-butandiol, 1,4-Dimethylolcyclohexan, Hydroxypivalinsäureneopentylglykolester, Diethylenglykol, Triethylenglykol, Methyldiethanolamin oder aromatisch-aliphatische oder aromatisch-cycloaliphatische Diole mit 8 bis etwa 30 C-Atomen, wobei als aromatische Strukturen heterocyclische Ringsysteme oder vorzugsweise isocyclische Ringsysteme wie Naphthalin-oder insbesondere Benzolderivate wie Bisphenol A eingesetzt werden können.

Gegebenenfalls können bei einer solchen Kettenverlängerung noch niedermolekulare Aminoverbindungen vorliegen. Hierzu geeignet sind beispielsweise primäre Aminoverbindungen mit zwei bis etwa 20, beispielsweise 2 bis etwa 12 C-Atomen wie Ethylamin, n-Propylamin, i-Propylamin, n-Propylamin, sek.-Propylamin, tert.-Butylamin, 1-Aminoisobutan, substituierte Amine mit zwei bis etwa 20 C-Atomen wie 2-(N,N-Dimethylamino)-1-aminoethan, Aminomercaptane wie 1-Amino-2-mercaptoethan, aliphatische Aminoalkohole mit 2 bis etwa 20, vorzugsweise 2 bis etwa 12 C-Atomen, beispielsweise Methanolamin, 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, aromatisch-aliphatische oder aromatisch-cycloaliphatische Aminoalkohole mit 6 bis etwa 20 C-Atomen, wobei als aromatische Strukturen heterocyclische Ringsysteme oder vorzugsweise isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol oder Gemische aus zwei oder mehr solcher Verbindungen.

Die Herstellung der Polymerpolyole wird nach den üblichen Regeln der organischen Polymerchemie durchgeführt. Wenn als Polymerpolyol ein Polyester, ein Polyether, ein Polycarbonat, ein Polyacetal oder eine sonstige als Polymerpolyol einsetzbare Verbindung eingesetzt wird, so wird deren Herstellung nach üblichen, dem Fachmann bekannten Methoden der Polymerchemie durchgeführt. Sollen verschiedene der genannten, als Polymerpolyole einsetzbaren Verbindungen miteinander aufgrund eines zu geringen Molekulargewichts der einzelnen Verbindungen verbunden werden, so geschieht dies, in Abhängigkeit von der zur Kettenverlängerung verwendeten difunktionellen Verbindung, ebenfalls nach den üblichen, in der organischen Chemie bekannten Regeln für die jeweiligen funktionellen Gruppen.

Anstelle von oder zusammen mit den oben genannten Alkoholen können auch mehrwertige primäre oder sekundäre Amine als Kettenbausteine eingesetzt werden, ebenso auch Aminocarbonsäuren und niedermolekulare Eiweißverbindungen. Konkret seien genannt: Polyoxyethylen-, Polyoxypropylen- und Polyoxybutylendiamin - und zwar sowohl die Homo- als auch die Copolymere auf Basis dieser Monomeren - mit Molekulargewichten bis zu 5 000 (Jeffamine) bzw. Glycin, Alanin, Valin, Leucin, Cystein, Cystin, Asparginsäure, Glutaminsäure, Tyrosin, Tryptophan, ε-Amino-capronsäure, 11-Aminoundecansäure, 4-Amino-buttersäure, Mono- und Di-amino-naphthoesäure. Der Anteil dieser Stoffe sollte weniger als 20, vorzugsweise weniger als etwa 10 Mol-% betragen, bezogen auf die zur Herstellung des Polyisocyanatpräpolymeren eingesetzten Polyole.

Zur Funktionalitätsbegrenzung der Polyisocyanatpräpolymeren können bis zu 30 % der NCO-Gruppen mit monofunktionellen Stoffen reagieren, insbesondere mit MonoAlkoholen, - Aminen und - Carbonsäuren. Eine entsprechende Möglichkeit zur Funktionalitätsbegrenzung ist beispielsweise in der EP 0746 577 beschrieben.

Ein als Bestandteil eines erfindungsgemäßen 1K-PUR-Klebstoffs eingesetztes Polyisocyanatpräpolymeres kann gegebenenfalls auch unter Verwendung eines tertiären Amins mit mindestens einer funktionellen Gruppe zum Einbau in die Polymerkette hergestellt werden, wobei ein derartiges Amin in die Polymerkette eingebaut wird. Dieses Amin enthält jedoch keine Polyether-Strukturen. Die Anzahl der funktionellen Gruppen eines solchen tertiären Amins beträgt vorzugsweise 2. Es sind aber auch 3 oder 1 funktionellen Gruppen pro tertiärem Amin möglich.

Geeignete tertiäre Amine weisen beispielsweise als funktionelle Gruppen -OH, -SH, - COOH, -NCO, -NH₂ oder -NHR oder ein Gemisch aus zwei oder mehr davon auf, wobei R für eine Alkylgruppe mit 1 bis 25 C-Atomen steht. Vorzugsweise werden HydroxylGruppen-haltige Amine eingesetzt. Geeignete Verbindungen sind beispielsweise N,N-Dimethylethanolamin, N,N-Dimethyldiaminoethan, N-Methyldiethanolamin, N,N-dimethyl-2-(2-Dimethylaminoethoxy-)ethanol, N,N,N-Trimethyl-N-hydroxethyl-diaminoethan-bisaminoethylether, N,N-Bis-(3-dimethylaminopropyl-)N-isopropanolamin, Tetramethyliminobispropylamin oder N-(3-Dimethylaminopropyl-)N,N-diisopropanolamin oder Gemische aus zwei oder mehr davon.

Geeignete tertiäre Amine können bei der Herstellung der im erfindungsgemäßen 1K-PUR-Klebstff enthaltenen Polyisocyanatpräpolymeren in einer Menge von 0 bis 10, beispielsweise 0,1 bis 5 oder etwa 0,5 bis etwa 3 g pro 100 g Präpolymerem eingesetzt werden.

Ein zum Einsatz in einem erfindungsgemäßen Klebstoff geeignetes Polyisocyanatpräpolymeres weist ein Molekulargewicht von mindestens etwa 500, vorzugsweise jedoch mindestens etwa 1000 auf. Besonders geeignet sind Polyisocyanatpräpolymere mit einem Molekulargewicht von mindestens etwa 2000. Die Obergrenze des Molekulargewichts wird im wesentlichen nur durch die Handhabbarkeit des Klebstoffs bestimmt, der Klebstoff muß zumindest streichfähig, vorzugsweise pastös oder insbesondere flüssig sein. Dies kann gegebenenfalls durch Verwendung von Plastifizierern oder Lösemitteln erreicht werden, im Rahmen einer bevorzugten Ausführungsform der vorliegenden Erfindung enthalten die erfindungsgemäßen Klebstoffe jedoch keine Lösemittel.

Es ist daher erfindungsgemäß bevorzugt, wenn ein zum Einsatz in einem erfindungsgemäßen Klebstoff geeignetes Polyisocyanatpräpolymeres eine Brookfield Viskosität in einem Bereich von etwa 500 bis etwa 100.000 mPas, beispielsweise etwa 1.000 bis etwa 20.000 mPas oder etwa 2.000 bis etwa 10.000 mPas aufweist (gemessen mit Brookfield Digital Viscometer RVTDV-II, Spindel 2, 20 U/min nach EN ISO 2555).

Neben mindestens einem Polyisocyanatpräpolymeren enthält ein erfindungsgemäßer 1K-Polyurethanklebstoff zweckmäßigerweise noch mindestens einen nicht einbaubaren Katalysator. Als Katalysatoren eignen sich beispielsweise tertiäre Amine, die nicht in die Präpolymerkette eingebaut werden wie Diazabicyclooctan(Dabco), Triethylamin, Dimethylbenzylamin (Desmorapid DB, BAYER), Bis-dimethylaminoethylether (Calalyst A I, UCC), Tetramethylguanidin, Bis-dimethylaminomethyl-phenol, 2,2'-Dimorpholinodiethylether, 2-(2-Dimethylaminoethoxy)ethanol, 2-Dimethylaminoethyl-3-dimethylaminopropylether, Bis-(2-dimethylaminoethyl)ether, N,N-Dimethylpiperazin, N-(2-hydroxyethoxyethyl)-2-azanorborane, Tacat DP-914 (Texaco Chemical), Jeffcat^{™}, N,N,N,N-Tetramethylbutan-1,3-diamin, N,N,N,N-Tetramethylpropan-1,3-diamin oder N,N,N,N-Tetramethylhexan-1,6-diamin oder Gemische aus zwei oder mehr davon.

Die Katalysatoren können auch in oligomerisierter oder polymerisierter Form vorliegen, z.B. als N-methyliertes Polyethylenimin.

Als Katalysatoren geeignet sind darüber hinaus 1-Methylimidazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylamino-pyridin, 4-Pyrrolidinopyridin, 4-Morpholino-pyridin, 4-Methylpyridin oder N-Dodecyl-2-Methyl-imidazol oder Gemische aus zwei oder mehr davon.

Neben oder anstatt der tertiären Amine können auch metallorganische Verbindungen wie Organozinnverbindungen von Carbonsäuren, starke Basen wie Alkalihydroxide, - alkoholate und -ahenolate, z.B. Di-n-Octyl-zinn-mercaptid, Dibutylzinnmaleat, -diacetat, - dilaurat, -dichlorid, -bisdodecylmercaptid, Zinn-II-acetat, -ethylhexoat und -diethylhexoat oder Blei-phenyl-ethyl-dithiocarbaminat in einem erfindungsgemäßen 1K-PUR-Klebstoff enthalten sein.

Im Rahmen einer bevorzugten Ausführungsform der vorliegenden Erfindung enthält ein erfindungsgemäßer 1K-PUR-Klebstoff als Katalysator 2,2'-Dimorpholinodiethylether, 2-(2-Dimethylaminoethoxy)ethanol, 2-Dimethylaminoethyl-3-dimethylaminopropylether, Bis-(2-dimethylaminoethyl)ether, N,N-Dimethylpiperazin, N-(2-hydroxyethoxyethyl)-2-azanorborane, Tacat DP-914 (Texaco Chemical), Jeffcat^{™}, N,N,N,N-Tetramethylbutan-1,3-diamin, N,N,N,N-Tetramethylpropan-1,3-diamin oder N,N,N,N-Tetramethylhexan-1,6-diamin oder Gemische aus zwei oder mehr davon, insbesondere 2,2'-Dimorpholinodiethylether.

Neben einem oder mehreren Polyisocyanatpräpolymeren und vorzugsweise einem oder mehreren Katalysatoren enthält ein erfindungsgemäßer 1K-PUR-Klebstoff zwingend noch mindestens ein 2 bis 4, vorzugsweise 3 OH-Gruppen aufweisendes Aminopolyetherpolyol mit einem Molverhältnis von Ethergruppen zu Aminostickstoffatomen von etwa 7 bis etwa 30, insbesondere etwa 9 bis etwa 25 oder etwa 11 bis etwa 20. Die Reaktivität der Aminopolyetherpolyole kann durch Umsetzung der OH-Gruppen mehr oder weniger vollständig herabgesetzt sein, z.B. durch Veresterung oder Veretherung Bevorzugt werden jedoch Aminopolyetherpolyole eingesetzt.

Der Begriff "enthalten" ist dabei im Hinblick auf das Aminopolyetherpolyol dahingehend auszulegen, daß das Aminopolyetherpolyol oder ein Gemisch aus zwei oder mehr geeigneten Aminopolyetherpolyolen in die Polymerkette des Polyisocyanatpräpolymeren eingebunden vorliegt.

Im Rahmen einer bevorzugten Ausführungsform der vorliegenden Erfindung werden Aminopolyetherpolyole als Bestandteil der erfindungsgemäßen 1K-PUR-Klebstoffe eingesetzt, die nur einen Aminostickstoff pro Molekül aufweisen.

Als Aminopolyetherpolyole eignen sich daher grundsätzlich alle Aminopolyetherpolyole wie sie beispielsweise durch Umsetzung eines 3 OH-Gruppen tragenden tertiären Amins mit Alkylenoxiden unter geeigneten Bedingungen, beispielsweise unter den oben im Zusammenhang mit der Herstellung von Polyetherpolyolen beschriebenen Reaktionsbedingungen herstellen lassen. Im Rahmen einer bevorzugten Ausführungsform der vorliegenden Erfindung werden als Bestandteil des erfindungsgemäßen 1K-PUR-Klebstoffs Aminopolyetherpolyole eingesetzt, die durch Umsetzung von Trialkanolaminen der allgemeinen Formel N(-R¹-OH)₃, worin die Reste R¹ jeweils unabhängig voneinander für einen linearen oder verzweigten, gesättigten oder ungesättigten Alkylenrest mit 1 bis 22, insbesondere 2 bis 5 C-Atomen stehen, erhältlich sind.

Besonders geeignet sind dabei Aminopolyetherpolyole auf der Basis von Trialkanolaminen der allgemeinen Formel N(-R¹-OH)₃, worin die Reste R¹ jeweils unabhängig voneinander für lineare, gesättigte Alkylenreste mit 2 bis 4 C-Atomen (Ethylen, n-Propylen oder n-Butylen) stehen. Im Rahmen einer bevorzugten Ausführungsform der vorliegenden Erfindung enthält ein erfindungsgemäßer 1K-PUR-Klebstoff mindestens ein Aminopolyetherpolyol auf Basis von Triethanolamin oder Tripropanolamin.

Die erfindungsgemäß einsetzbaren Aminopolyetherpolyole weisen Ethergruppen auf, wobei das Gesamtverhältnis von Ethergruppen (R-O-R) zu Aminostickstoffatomen pro Molekül in einem Aminopolyetherpolyol etwa 7 bis etwa 30, insbesondere etwa 9 bis etwa 25 oder etwa 11 bis etwa 20 oder etwa 11 bis etwa 15, beispielsweise etwa 12 bis etwa 19 oder etwa 13 bis etwa 18 oder etwa 14 bis etwa 17 oder etwa 15 bis etwa 16 beträgt. Die Ethergruppen werden beispielsweise durch Umsetzung eines Trialkanolamins mit cyclischen Ethern erzeugt. Vorzugsweise werden dabei cyclische Ether mit 2 bis etwa 6 C-Atomen, insbesondere Alkylenoxide mit 2 bis etwa 4 C-Atomen, beispielsweise Ethylenoxid oder Propylenoxid, eingesetzt.

Ein im Rahmen der vorliegenden Erfindung einsetzbares Aminopolyetherpolyol kann Ethergruppen aufweisen, die aus der Umsetzung mit nur einer Sorte cyclische Ether stammen. Es ist jedoch im Rahmen der vorliegenden Erfindung ebenso möglich Aminopolyetherpolyole einzusetzen, deren Ethergruppen aus der Umsetzung mit zwei oder mehr Sorten cyclischer Ether stammen. Eine solche Umsetzung kann dabei alternierend, blockweise oder statistisch erfolgt sein.

Besonders bevorzugt sind im Rahmen der vorliegenden Erfindung Aminopolyetherpolyole wie sie sich durch Umsetzung eines Trialkanolamins, insbesondere durch Umsetzung von Triethanolamin oder Tripropanolamin mit Ethylenoxid oder Propylenoxid oder deren Gemisch ergeben.

Es hat sich für die erfindungsgemäßen Klebstoffe als vorteilhaft herausgestellt, dass der Gehalt an Alkalimetallionen unterhalb von 20 ppm, vorzugsweise unterhalb von etwa 10 ppm, beispielsweise unterhalb von etwa 5 ppm, bezogen auf das Polyisocyanatpräpolymere oder die Polyisocyanatpräpolymeren, liegt.

Ein erfindungsgemäßer Klebstoff enthält das Polyisocyanatpräpolymere oder das Gemisch aus zwei oder mehr solcher Polyisocyanatpräpolymeren in einer Menge von etwa 80 bis etwa 99,7 Gew.-%, insbesondere etwa 88 bis etwa 99,6 Gew.-%, beispielsweise etwa 91 bis etwa 95 Gew.-%:

Der Anteil an Katalysator oder Katalysatoren am erfindungsgemäßen Klebstoff liegt im Bereich von 0 bis etwa 8 Gew.-%, beispielsweise etwa 0,2 bis etwa 7 Gew.-%.

Der Anteil an Aminopolyetherpolyol oder Aminopolyetherpolyolen am erfindungsgemäßen Klebstoff beträgt etwa 0,2 bis etwa 4 Gew.-%, insbesondere etwa 0,5 bis etwa 2 Gew.-%.

Das Verhältnis des vorteilhafterweise eingesetzten Katalysators zum Aminopolyetherpolyol beträgt beispielsweise etwa 20:1 bis etwa 1:10, beispielsweise etwa 20:1 bis etwa 1:3 oder etwa 10:1 bis etwa 1,6:1.

Darüber hinaus kann der erfindungsgemäße Klebstoff auch noch übliche Additive enthalten, wie z. B. Füllstoffe wie Kreide, mineralische Silikate, beispielsweise Schichtsilikate, Kunststoffe, Hohlkugeln, Kieselsäuren, Füllstoff-Fasern, Pigmente, Entschäumer, Haftvermittler, Weichmacher, Alterungsschutzmittel und CO₂-absorbierende bzw. adsorbierende Zusatzstoffe, z. B. Molekularsiebe und Kieselgel. Es können aber auch Stoffe hinzugefügt werden, die mit dem CO₂ chemisch reagieren, z.B. CaO.

Der erfindungsgemäße Klebstoff hat bei Verarbeitungstemperatur eine Viskosität von etwa 500 bis etwa 100.000 mPas, beispielsweise etwa 1.000 bis etwa 20.000 mPas oder etwa 2.000 bis etwa 10.000 mPas aufweist (gemessen mit Brookfield Digital Viscometer RVTDV-II, Spindel 2, 20 U/min nach EN ISO 2555). Die Viskosität ändert sich bei Lagerung nur unwesentlich, d.h. der Klebstoff ist dann noch brauchbar. Konkret ändert sich die Viskosität innerhalb von 3 Monaten bei 40 °C unter Feuchtigkeitsausschluß allenfalls im Bereich von maximal +250 %, insbesondere von maximal +100 %, bezogen auf die Ausgangsviskosität. Die Viskosität wird wie oben angegeben mit einem Brookfield-Viskosimeter bestimmt.

Der erfindungsgemäße Klebstoff weist NCO-Gruppen in solchen Mengen auf, daß sich nach dem Auftrag des Klebstoffs auf ein Substrat eine merkliche Verfestigung ergibt. Zweckmäßigerweise sollte der NCO-Gehalt in einem Bereich von etwa 1 bis etwa 20 g NCO pro 100 g Klebstoff, insbesondere bei etwa 5 bis etwa 19 oder etwa 3 bis etwa 15 oder etwa 8 bis etwa 13, beispielsweise etwa 10 bis etwa 12 g/100g Klebstoff (Gew.-%) liegen. Der NCO-Gehalt wird nach DIN EN 1242 (entspricht BS EN 1242) bestimmt.

Die Herstellung des in einem erfindungsgemäßen Klebstoff enthaltenen Polyisocyanatpräpolymeren kann sowohl in einem einstufigen als auch in einem mehrstufigen Verfahren erfolgen, wobei die allgemein üblichen, dem Fachmann bekannten Verfahrensbedingungen zur Herstellung von NCO-Präpolymeren eingehalten werden.

Beim bevorzugten einstufigen Verfahren werden beispielsweise zunächst alle Ausgangsstoffe, gegebenenfalls in Gegenwart eines organischen Lösemittels und vorzugsweise unter inerten Bedingungen, beispielsweise unter Schutzgas, bei einem Wassergehalt von weniger als etwa 0,5 Gew.-%, vorzugsweise weniger als etwa 0,1 Gew.-%, gemischt. Die Mischung wird auf etwa 40 bis etwa 110°C, insbesondere auf etwa 60 bis etwa 98°C für einen Zeitraum von etwa 0,1 bis etwa 3, insbesondere etwa 0,5 bis etwa 2 Stunden erhitzt. Die Reaktionszeit zur Herstellung des Polyisocyanatpräpolymeren oder des gesamten Klebstoffs kann durch Zugabe von Katalysatoren verkürzt werden. Als Katalysatoren sind beispielsweise die oben genannten tertiäre Amine oder metallorganische Katalysatoren geeignet. Beispielsweise sind dies Triethylamin, Dimethylbenzylamin, Bis-dimethylaminoethylether und Bis-methylaminomethylphenol. Besonders zur Herstellung des Polyisocyanatpräpolymeren geeignet sind beispielsweise 1-Methylimidazol, 1-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylaminopyridin (DMAP), 4-Pyrrolidinopyridin, 4-Morpholinopyridin und 4-Methylpyridinoder metallorganische Verbindungen wie Eisen-, Titan- oder Zinnverbindungen, insbesondere die 1,3-Dicarbonylverbindungen des Eisens oder des 2- bzw. 4-wertigen Zinns, insbesondere die Sn(II)-Carboxy-late bzw. die Dialkyl-Sn-(IV)-Dicarboxylate oder die entsprechenden Dialkoxylate, beispielsweise Dibutylzinndilaurat, Dibutylzinndiacetat, Dioctylzinndiacetat, Dibutylzinnmaleat, Zinn(II)octoat, Zinn(II)phenolat oder die Acetyl-acetonate des 2- bzw. 4-wertigen Zinns.

Grundsätzlich ist die Reihenfolge der Zugabe der einzelnen Komponenten beliebig. So kann beispielsweise das Aminopolyetherpolyol getrennt von den Polymerpolyolen und gegebenenfalls weiteren Polyolen mit Polyisocyanaten versetzt werden, es kann den Polymerpolyolen und gegebenenfalls weiteren Polyolen jedoch auch bereits vor der Reaktion mit den Isocyanaten direkt zugegeben werden. Ebenso ist es möglich, das Aminopolyetherpolyol oder das Gemisch aus zwei oder mehr davon dem Polyisocyanatpräpolymeren erst nach dessen Herstellung zuzugeben.

Der erfindungsgemäße Klebstoff weist beispielsweise die folgenden Vorteile auf:
1. Er härtet bei dünnem Auftrag sehr schnell aus, z. B. an Holz bei Raumtemperatur (20 °C) in ca. 0,5 bis weniger als 5 Minuten.
2. Trotz der schnellen Aushärtung ist der Klebstoff ausreichend lagerstabil, d. h. er verändert seine Viskosität vorzugsweise maximal um bis +100 %, insbesondere maximal bis zu +50%, wenn er 3 Monate bei 40 °C unter Ausschluß von Feuchtigkeit gelagert wird. Das gilt auch bei Verwendung von aromatischen Polyisocyanaten.
3. Die physikalischen Eigenschaften des Klebstoffes werden durch den Zusatz des Aminopolyetherpolyols praktisch nicht negativ verändert. Das gilt insbesondere für die Rheologie.
4. Der Klebstoff ist universell einsetzbar, da er auf vielen Substraten haftet.
5. Der Klebstoff ist lange verarbeitbar und weist eine hohe Wärme und Wasserfestigkeit auf.
6. Die Abbindezeit wird verkürzt, bezogen auf die offene Zeit. So liegt das Verhältnis der Preßzeit, bezogen auf die offene Zeit, im wesentlichen unter 4,0 und nicht bei ca. 5,0.
7. Die Festigkeiten werden durch den Einbau der tertiären Aminopolyetherpolyole praktisch nicht verändert.
Bei zusätzlicher Verwendung eines nicht eingebauten Katalysators wird die Abbindezeit auch absolut verringert, z.B. unter 5 oder gar unter 3 Minuten.

Aufgrund der obigen Vorteile ergeben sich für den erfindungsgemäßen 1-K-PUR-Klebstoff Verwendungsmöglichkeiten als Klebstoff, insbesondere als Holzklebstoff, als Beschichtungsmasse oder Dichtstoff, insbesondere als Vielzweck-Klebstoff (Haushalts-Klebstoff), Montage-Klebstoff, Konstruktions-Klebstoff, Papier- und Verpackungs-Klebstoff, Folienkaschierklebstoff oder Schmelzklebstoff.

Die Erfindung wird nachfolgend durch Beispiele näher erläutert.

### Beispiele:

### 1. Herstellung eines nicht erfindungsgemäßen Polyisocyanatpräpolymeren

46,95 Gewichtsteile Lupranol 1000 (Polypropylenglykol, Fa. BASF), OH-Zahl 56, Molekulargewicht 2000 wurden bei 70 °C und 15 mbar in einem evakuierbaren, beheizbaren und kühlbaren PC-Labordissolver unter Rühren bis auf einen Wassergehalt von weniger als 400 ppm entwässert. Nach Abkühlen des entwässerten Polyols auf 30 °C wurden 23 Gewichtsteile Desmodur 44 M (4,4'-Diphenylmethandiisocyanat, NCO-Gehalt 33 %, Fa. Bayer) und 23 Gewichtsteile Desmodur VKS 20 F (4,4'-Diphenylmethandiisocyanat mit polymeren Anteilen, NCO-Gehalt 30,5 %, Fa. Bayer) zugegeben. Das so erhaltene Reaktionsgemisch wurde unter Schutzgas und Rühren auf 60 °C erhitzt und mit 0,05 Gewichtsteilen Dibutylzinndilaurat versetzt. Während der Reaktion zum Präpolymeren stieg die Temperatur im Reaktionsgemisch auf etwa 95 °C an. Es wurde dann bei etwa 85 °C solange weitergerührt, bis die zu erwartende theoretische NCO-Zahl innerhalb einer Grenze von etwa 0,5 % erreicht wurde. Anschließend wurde das erhaltene Präpolymere unter Rühren auf Raumtemperatur abgekühlt.

### 2. Ermittlung eines geeigneten Katalysatorgehalts für einen nicht erfindungsgemäßen Klebstoff

Das unter 1. erhaltene, nicht erfindungsgemäße Präpolymere wurde mit verschiedenen Mengen an Katalysator versetzt, homogenisiert und anschließend die offene Zeit, die Preßzeit und die Lagerstabilität bestimmt. Die eingesetzten Katalysatormengen und die erhaltenen Ergebnisse sind der nachfolgenden Tabelle 1 zu entnehmen (Mengenangaben in Gewichtsteilen, Zeitangaben in Minuten).

**Tabelle 1**

| Formulierung | A1 | B1 | C1 | D1 | E1 |
|---|---|---|---|---|---|
| Präpolymeres | 93 | 93 | 93 | 93 | 93 |
| DMDEE¹ | 0,5 | 1 | 2 | 6 | 8 |
| Offene Zeit | 7 | 4 | 2,5 | 1 | 0,95 |
| Preßzeit | 35 | 15 | 10 | 5,1 | 5,0 |
| Lagerstabilität | + | + | + | + | - |

| | | | | | |
|---|---|---|---|---|---|
| ¹: Dimorpholinodiethylether-2,2' (Hersteller: Fa. Air Products) | | | | | |

Die Beispiele zeigen, daß im vorliegenden nicht erfindungsgemäßen Fall die Reaktivität bei einer Menge von etwa 6 Gewichtsteilen DMDEE den Beginn eines Plateaus erreicht hat und durch die Zugabe weiterer Katalysatormengen nur noch unwesentlich erhöht werden kann. Eine weitere Erhöhung der Katalysatormenge über den Beginn des Plateaus hinaus führt darüber hinaus zu einer Verringerung der Lagerstabilität (siehe Formulierung E1).

### 3. Herstellung eines erfindungsgemäßen Klebstoffs

Es wurde wie in Beispiel 1 verfahren, wobei zusätzlich zu Lupranol 1000 (Polypropylenglykol, Fa. BASF), OH-Zahl 56, Molekulargewicht 2000 noch ein Aminopolyetherpolyol auf Basis von Triethanolamin und 17 Mol EO (OHZ = 150) in den in der nachfolgenden Tabelle 2 angegebenen Mengen zugegeben wurde.

### 4. Überprüfung der offenen Zeit und der Preßzeit des Klebstoffs bei Zugabe der erfindungsgemäßen Aminopolyetherpolyole

Gemäß der nachfolgenden Tabelle 2 wurden dir Rezepturen A2 bis F2 hergestellt und auf offene Zeit, Preßzeit und Lagerstabilität hin überprüft. Die Ergebnisse sind ebenfalls der Tabelle 2 zu entnehmen.

**Tabelle 2**

| Formulierung | A2 | B2 | C2 | D2 | E2 | F2 |
|---|---|---|---|---|---|---|
| Präpolymeres | 99 | 99 | 99 | 97 | 95 | 94 |
| Gehalt an Aminopolyetherpolyol | 6 | 6 | 6 | 4 | 2 | 1 |
| DMDEE | - | 1 | 6 | 6 | 6 | 6 |
| Offene Zeit | 8 | 3,5 | 0,9 | 0,92 | 0,97 | 1 |
| Preßzeit | 20 | 12 | 4,9 | 3,8 | 3,0 | 2,5 |
| Lagerstabilität | + | + | - | - | + | + |

In der nachfolgenden Tabelle 3 werden die Eigenschaften der Rezepturen F2 und D1 gegenüberstellend verglichen.

**Tabelle 3**

| Beispiel | F2 (erfindungsgemäß) | D1 |
|---|---|---|
| Prüfung | | |
| **Offene Zeit** | **1 Minute** | **1 Minute** |
| **Preßzeit** | **2,5 Minuten** | **5,1 Minuten** |
| Viskosität | 4750 mPas | 5000 mPas |
| Watt 91 | 8,4 N/mm² | 8,4 N/mm² |
| EN 204 D1 | 14,2 N/mm² | 13,9 N/mm² |
| EN 204 D2 | 12,3 N/mm² | 12,0 N/mm² |
| EN 204 D3 | 5,7 N/mm² | 5,5 N/mm² |
| EN 204 D4 | 5,2 N/mm² | 5,2 N/mm² |
| Lagerstabilität | + | + |

Aus dem Vergleich geht hervor, daß die erfindungsgemäße Zusammensetzung bei identischer offener Zeit eine deutlich verringerte Preßzeit benötigt. Die Festigkeiten sind praktisch gleich.

Sollwerte und Lagerungsfolge nach der die Werte für EN 204 D1 bis D4 ermittelt wurden:

| | | |
|---|---|---|
| EN 204 D1 soll > 10 N/mm² | Trockenbindefestigkeit | Lagerungsfolge 1 |
| EN 204 D2 soll >= 8 N/mm² | Naßbindefestigkeit | Lagerungsfolge 2 |
| EN 204 D3 soll >= 2 N/mm² | Naßbindefestigkeit | Lagerungsfolge 3 |
| EN 204 D4 soll >= 4 N/mm² | Naßbindefestigkeit | Lagerungsfolge 5 |

Es wurde an einer elektronischen Zerreißmaschine (Instron Modell 4302, 10 kN) geprüft.

### 5. Beschreibung der Prüfmethoden

- Wassergehalt:: nach Karl Fischer, Angaben in ppm
- NCO-Gehalt:: Bestimmung des NCO-Gehalts nach DIN EN 1242
- Viskosität:: Bestimmung nach Brookfield Digital Viscometer RTVDV II bei 23 °C, Angabe in mPas

### Bestimmung der offenen Zeit:

Die Messung erfolgte an konditionierter, ungedämpfter massiver Buche (Fagus sylvatica, 400 x 125 x 5 mm) mit einer Holzfeuchte von 8 bis 10 % und einem Klebstoffauftrag von 200 µm. Die Messung wurde unter konstanten klimatischen Bedingungen bei 23 °C und 50 % relativer Luftfeuchte durchgeführt. Der zu prüfende, bei 23 °C gelagerte Klebstoff wurde mit einer Spiralrakel aufgetragen. Es wurde die Zeit festgehalten innerhalb derer sich eine Haut auf dem Klebstoff bildet.

### Bestimmung der Preßzeit:

Die Prüfkörper aus ungedämpfter massiver Buche (Fagus sylvatica, 125 x 20 x 5 mm) wurden für einen Monat unter konstanten klimatischen Bedingungen (23 °C, 50 % relative Luftfeuchte) gelagert, um eine identische Ausgleichsholzfeuchtigkeit (ca. 8 %) zu ermöglichen. Eine Seite der zu verklebenden Prüfkörper wurde mit einer Spiralrakel mit einer 200 µm Klebstoffschicht beaufschlagt und sofort mit dem zweiten Prüfkörper gefügt und mit einem Preßdruck von 0,35 N/mm² verpreßt. Die Prüfung wurde mit ansteigender Preßzeit so lange wiederholt, bis im Zugversuch ein Mindestfestigkeitswert von 3 N/mm² erreicht wurde. Die Vorschubgeschwindigeit der Zerreißmaschine betrug 50 mm/min. Die zum Erreichen eines Festigkeitswerts von 3 N/mm² benötigte Preßzeit wurde festgehalten.

### Bestimmung der Wärmefestigkeit nach Watt 91:

Mit dem zu prüfenden Klebstoff wurden Prüfkörper nach DIN EN 205 hergestellt. Anschließend wurden die Prüfkörper in Anlehnung an DIN EN 204 D1, Lagerungsfolge 1, im Zugscherversuch geprüft. Abweichend von der DIN EN 204 D1 wurden die Prüfkörper nicht bei Raumtemperatur sondern in der Wärme überprüft. Dazu wurden die Prüfkörper für 1h bei 80 °C im Umlufttrockenschrank gelagert und innerhalb von 10 s nach der Entnahme in einer elektronischen Zerreißmaschine (Instron) zerrissen. Die Vorschubgeschwindigkeit der Zerreißmaschine betrug 50 mm/min. Angabe: Kraft [N/mm²].

### Bestimmung der Wasserfestigkeit:

DIN EN 204 vom Oktober 1991. Angabe: Kraft [N/mm²].

### Prüfung der Lagerstabilität:

Der zu prüfende Klebstoff wurde in einer 250 ml Glasflasche mit einem wasserdampfundurchlässigen Verschluß bei 40 ± 1°C über einen Zeitraum von 3 Monaten gelagert. Nach dieser Zeit erfolgte eine Überprüfung der Viskosität. Die Lagerstabilität gilt als gut (+), wenn die Endviskosität nach der Lagerzeit um einen Faktor 2,5 oder weniger höher liegt als die Viskosität zu Beginn der Lagerzeit.

## Patentansprüche

1. 1K-Polyurethanklebstoff mit einem Gehalt an Alkalimetallionen von weniger als 20 ppm, mindestens enthaltend ein Polyisocyanatpräpolymeres und mindestens ein 2 bis 4 OH-Gruppen aufweisendes Aminopolyetherpolyol, das in die Polymerkette des Polyisocyanatpräpolymeren eingebunden vorliegt, wobei das molare Verhältnis von Ethergruppen zu Aminostickstoff im Aminopolyetherpolyol 7 bis 30 beträgt, und mindestens einen nicht einbaubaren Katalysator, und zwar im Verhältnis von Katalysator oder Katalysatoren zu Aminopolyetherpolyol oder Aminopolyetherpolyolen von 20:1 bis 1:3.

2. Klebstoff gemäß Anspruch 1, **dadurch gekennzeichnet, daß** er mindestens 88 Gew.-% an Polyisocyanatpräpolymeren enthält.

3. Klebstoff nach einem der Ansprüche 1, bis 2, **dadurch gekennzeichnet, daß** das Polyisocyanatpräpolymere einen NCO-Gehalt von 4 bis 17 Gew.-% aufweist.

4. Klebstoff nach einem der Ansprüche 1 bis 3, **dadurch gekennzeichnet, daß** er einen Gehalt an Aminopolyetherpolyol oder Aminopolyetherpolyolen von 0,2 bis 4 Gew.-% aufweist.

5. Klebstoff nach einem der Ansprüche 1 bis 4, **dadurch gekennzeichnet, daß** er als Aminopolyetherpolyol ein Aminopolyetherpolyol auf Basis von Triethanolamin oder Tripropanolamin enthält.

6. Klebstoff nach Anspruch 4, **dadurch gekennzeichnet, daß** er als Katalysator mindestens 2,2'-Dimorpholinodiethylether enthält.

7. Verfahren zur Herstellung eines Klebstoffes gemäß mindestens einem der Ansprüche 1 bis 6, bei dem ein Polyisocyanatpräpolymeres mit mindestens einem Aminopolyetherpolyol vermischt wird oder ein Polyisocyanatpräpolymeres in Gegenwart mindestens eines Aminopolyetherpolyols hergestellt wird, wobei neben dem Aminopolyetherpolyol mindestens ein nicht einbaubarer Katalysator verwendet wird.

8. Verwendung eines Klebstoffes nach einem der Ansprüche 1 bis 6 oder eines nach Anspruch 7 hergestellten Klebstoffs als Klebstoff, Beschichtungsmasse oder Dichtstoff, insbesondere als Vielzweck-Klebstoff (Haushaits-Klebstoff), Montage-Klebstoff, Konstruktions-Klebstoff, Papier- und Verpackungs-Klebstoff, Folienkaschierklebstoff oder Schmelzklebstoff.

## Claims

1. A one-component polyurethane adhesive with an alkali metal ion content of less than 20 ppm, at least containing a polyisocyanate prepolymer and at least one aminopolyether polyol having 2 to 4 OH groups, which exists bound in the polymer chain of the polyisocyanate prepolymer, the molar ratio of the ether groups to the amino nitrogen in the aminopolyether polyol being from 7 to 30, and at least one non-incorporable catalyst, and indeed in the ratio of catalyst(s) to aminopolyether polyol(s) from 20:1 to 1:3.

2. The adhesive according to claim 1, **characterized in that** it contains at least 88% by weight of polyisocyanate prepolymers.

3. The adhesive according to any of claims 1 to 2, **characterized in that** the polyisocyanate prepolymer has an NCO content of 4 to 17% by weight.

4. The adhesive according to any of claims 1 to 3, **characterized in that** it has a content of aminopolyether polyol(s) of 0.2 to 4% by weight.

5. The adhesive according to any of claims 1 to 4, **characterized in that** it contains an aminopolyether polyol based on triethanolamine or tripropanolamine as the aminopolyether polyol.

6. The adhesive according to claim 4, **characterized in that** it contains at least 2,2'-dimorpholinodiethylether as a catalyst.

7. A method for preparing an adhesive according to at least one of claims 1 to 6, wherein a polyisocyanate prepolymer is mixed with at least one aminopolyether polyol or a polyisocyanate prepolymer is prepared in the presence of at least one aminopolyether polyol, at least one non-incorporable catalyst besides the aminopolyether polyol being used.

8. The use of an adhesive according to any of claims 1 to 6 or an adhesive prepared by the method according to claim 7 as an adhesive, coating composition or sealant, particularly as a multipurpose adhesive (household adhesive), assembly adhesive, structural adhesive, paper and packaging adhesive, film laminating adhesive or hot-melt adhesive.

## Revendications

1. Colle monocomposant à base de polyuréthane ayant une teneur en ions de métal alcalin inférieure à 20 ppm, contenant au moins un prépolymère de polyisocyanate et au moins un aminopolyétherpolyol présentant 2 à 4 groupes OH, qui existe à l'état lié dans la chaîne polymère du prépolymère de polyisocyanate, le rapport molaire des groupes éther à l'atome d'azote du groupe amino dans l'aminopolyétherpolyol étant de 7 à 30, et au moins un catalyseur non incorporable, et en effet dans un rapport de catalyseur(s) à aminopolyétherpolyol(s) de 20:1 à 1:3.

2. Colle selon la revendication 1, **caractérisée en ce qu'**elle contient au moins 88% en poids de prépolymère de polyisocyanate.

3. Colle selon l'une quelconque des revendications 1 à 2, **caractérisée en ce que** le prépolymère de polyisocyanate présente une teneur en groupes NCO de 4 à 17% en poids.

4. Colle selon l'une quelconque des revendications 1 à 3, **caractérisée en ce qu'**elle présente une teneur en aminopolyétherpolyol(s) de 0,2 à 4% en poids.

5. Colle selon l'une quelconque des revendications 1 à 4, **caractérisée en ce qu'**elle contient en tant qu'aminopolyétherpolyol, un aminopolyétherpolyol à base de triéthanolamine ou de tripropanolamine.

6. Colle selon la revendication 4, **caractérisée en ce qu'**elle contient en tant que catalyseur, au moins l'éther 2,2'-dimorpholinodiéthylique.

7. Procédé de préparation d'un colle selon au moins l'une quelconque des revendications 1 à 6, dans lequel un prépolymère de polyisocyanate est mélangé avec au moins un aminopolyétherpolyol ou un prépolymère de polyisocyanate est préparé en présence d'au moins un aminopolyétherpolyol, au moins un catalyseur non incorporable étant employé en plus de l'aminopolyétherpolyol.

8. Utilisation d'une colle selon l'une quelconque des revendications 1 à 6 ou d'une colle préparée selon la revendication 7, sous forme de colle, enduit ou matière d'étanchéité, en particulier sous forme de colle multi-usages (colle domestique), colle de montage, colle de construction, colle pour papier et emballage, colle de contrecollage de feuilles ou colle fusible.
